# EUROPÄISCHE PATENTANMELDUNG

(11) **EP 2 394 781 A2**
(43) Veröffentlichungstag der Anmeldung: **14.12.2011**
(21) Anmeldenummer: 11180122.1
(22) Anmeldetag: 28.11.2008
(51) Int. Cl.: B23Q 11/00, B23Q 17/24, F16P 3/14, G01S 13/02, G01S 13/24, G01S 13/04, G01S 13/56

(54) **Werkzeugmaschinenüberwachungsvorrichtung**

(30) Priorität: 06.03.2008 DE 102008013055
(62) Teilanmeldung aus: 08873140.1
(71) Anmelder: Robert Bosch GmbH, 70442 Stuttgart (DE)
(72) Erfinder: Seidel, Juergen, 73728 Esslingen (DE); Braun, Heiko, 70771 Leinfelden-Echterdingen (DE); Hasch, Juergen, 70195 Stuttgart (DE); Weikert, Lars, 70180 Stuttgart (DE); Pletinckx, Jo, 71723 Grossbottwar (DE); Hees, Alexander Werner, 74321 Bietigheim-Bissingen (DE)

(57) **Zusammenfassung**

Die Erfindung geht aus von einer Werkzeugmaschinenüberwachungsvorrichtung mit einer Erkennungseinheit (24) zur Erkennung einer Anwendungssituation (66, 80) bei einer Werkzeugmaschine (10), wobei die Erkennungseinheit (24) eine Positions- und/oder Geschwindigkeitsbestimmung von menschlichem oder tierischem Gewebe ermöglicht.

Es wird vorgeschlagen, dass die Erkennungseinheit (24) es ermöglicht, eine Unterscheidung von menschlichem oder tierischem Gewebe einerseits und Holz oder Metall oder Kunststoffen andererseits zu treffen, wobei zumindest ein Ultrabreitband-Radarsensor (26, 28, 30) der Erkennungseinheit es ermöglicht, zur Detektion des menschlichen oder tierischen Gewebes eine Mehrzahl von diskreten, in der Frequenz gegeneinander verschobenen Frequenzen fᵢ abzustrahlen.

Des Weiteren betrifft die Erfindung eine Werkzeugmaschine mit einer derartigen Werkzeugmaschinenüberwachungsvorrichtung.

## Beschreibung

### Stand der Technik

Die Erfindung geht aus von einer Werkzeugmaschinenüberwachungsvorrichtung nach dem Oberbegriff des Anspruchs 1.

Aus der DE 10 2005 054 128 A1 ist eine Werkzeugmaschinenüberwachungsvorrichtung für eine Kreissäge bekannt. Diese weist eine Sensoreinheit zur Erzeugung und Erfassung eines elektromagnetischen Signals auf, welche in der Nähe eines Sägeblatts angeordnet ist. Ein Annähern eines Körperteils an das Sägeblatt kann durch Überwachung des Signalspektrums detektiert werden.

### Vorteile der Erfindung

Die Erfindung geht aus von einer Werkzeugmaschinenüberwachungsvorrichtung mit einer Erkennungseinheit zur Erkennung einer Anwendungssituation bei einer Werkzeugmaschine.

Es wird vorgeschlagen, dass die Erkennungseinheit es ermöglicht, eine Unterscheidung von menschlichem oder tierischem Gewebe einerseits und Holz oder Metall oder Kunststoffen andererseits zu treffen, wobei zumindest ein Ultrabreitband-Radarsensor der Erkennungseinheit es ermöglicht, zur Detektion des menschlichen oder tierischen Gewebes eine Mehrzahl von diskreten, in der Frequenz gegeneinander verschobenen Frequenzen fᵢ abzustrahlen.

Dadurch kann eine Bewegung eines Objekts in einem von der Werkzeugmaschinenüberwachungsvorrichtung überwachten Überwachungsbereich vorteilhaft charakterisiert werden. Hiermit kann eine Bewegung, welche auf eine potentielle Gefahr für einen Bediener der Werkzeugmaschine hindeutet, schnell erkannt werden.

Es kann eine hohe Sicherheit erreicht werden, wenn die Positions- und/oder Geschwindigkeitsbestimmung eine Positions- und/oder Geschwindigkeitsbestimmung von menschlichem oder tierischem Gewebe ist. Insbesondere erfolgt diese Erkennung von menschlichem oder tierischem Gewebe mittels einer spektralen Auswertung eines Radarsignals. Da ein derartiges Gewebe eine hohe Dämpfungswirkung in einem Frequenzbereich oberhalb von 2 GHz besitzt, kann für ein kontinuierliches Frequenzspektrum, dass diesen Bereich abdeckt oder für diskrete Frequenzen in diesem Frequenzbereich ein hohes Unterscheidungsvermögen erreicht werden kann.

In vorteilhafter Weise wird als Modulationsverfahren für das Sendesignal ein gestuftes Frequenz-Messverfahren genutzt. Hierbei kann die Übertragungsfunktion des Systems einschließlich des zu prüfenden Objektes gemessen werden, indem beliebige diskrete Frequenzen ausgesendet werden und die entsprechenden zugehörigen Reflexionen gemessen werden.

Alternativer Weise kann das erfindungsgemäße System ein Modulationsverfahren mit Pseudo-Noise-Codierung des Sendesignals nutzten, um durch Korrelation des Empfangssignals mit dem zeitlich verschobenen Sendesignal eine Impulsantwort des zu prüfenden Objektes zu messen.

Unter einer "Positionsbestimmung" soll insbesondere die Bestimmung der Position eines mittels der Werkzeugmaschinenüberwachungsvorrichtung überwachten Objekts relativ zu einem aktiven Objekt der Werkzeugmaschine, wie insbesondere relativ zu einem Werkzeug vorzugsweise in dessen angetriebenem Zustand, verstanden werden. Ferner soll unter einer "Geschwindigkeitsbestimmung" insbesondere die Bestimmung von zumindest einem Bewegungsmerkmal aus der Gruppe Bewegungsrichtung, momentaner Geschwindigkeitswert und momentaner Beschleunigungswert eines sich relativ zu einem aktiven Objekt der Werkzeugmaschine bewegenden Objekts verstanden werden.

In einer Ausführungsform der Erfindung wird vorgeschlagen, dass die Werkzeugmaschinenüberwachungsvorrichtung zumindest einen Ultrabreitband-Radarsensor aufweist. Unter einem "Ultrabreitband-Radarsensor" soll in diesem Zusammenhang insbesondere ein Radarsensor verstanden werden, mittels dessen ein ultrabreitbandiges Radarsignal erzeugt, gesendet, empfangen und/oder ausgewertet werden kann. Alternativ können mit einem solchen Sensor auch eine Vielzahl von diskreten, schmalbandigen Frequenzen, die allesamt innerhalb des ultrabreitbandigen Spektrums liegen, erzeugt, gesendet, empfangen und/oder ausgewertet werden. Unter einem "ultrabreitbandigen (oder Ultra Wide Band oder UWB) Spektrum" soll insbesondere ein elektromagnetisches Frequenzbandbreite verstanden werden, welche einen Nutzfrequenzbereich mit einer Mittenfrequenz im Frequenzbereich von 1 GHz bis 15 GHz und einer Frequenzbandbreite von zumindest 500 M Hz aufweist.

Auch eine Pseudo-Noise Codierung des Sendesignals kann als Modulationsverfahren für das erfindungsgemäße System genutzt werden.

Insbesondere ist der Ultrabreitband-Radarsensor Bestandteil der Erkennungseinheit.

Des Weiteren wird vorgeschlagen, dass die Erkennungseinheit ein Mittel aufweist, das dazu vorgesehen ist, einem Bewegungsmerkmal eines überwachten Objekts zumindest eine Sicherheitsmaßnahme zuzuordnen. Dadurch können bei der Erkennung einer kritischen Bewegung des überwachten Objekts anhand eines charakteristischen Bewegungsmerkmals Sicherheitsmaßnahmen rechtzeitig getroffen werden und ein Kontakt des Objekts mit einem aktiven Objekt der Werkzeugmaschine kann vermieden werden. Dieses charakteristische Bewegungsmerkmal kann eine Bewegungsrichtung, die z.B. auf das aktive Objekt gerichtet ist, oder ein Überschreiten eines vorgegebenen Schwellenwerts der momentanen Geschwindigkeit des Objekts und/oder der momentanen Beschleunigung des Objekts sein, die möglicherweise auf ein Abrutschen eines Körperteils eines Bedieners auf ein Werkstück hindeuten. Die Durchführung der Sicherheitsmaßnahme erfolgt vorzugsweise mittels einer Aktorikeinheit, die in Wirkverbindung mit der Erkennungseinheit steht.

Insbesondere wird vorgeschlagen, dass zumindest einem Bewegungsmerkmal eine Sicherheitsabschaltung der Werkzeugmaschine zugeordnet ist. Dadurch kann eine besonders hohe Sicherheit erreicht werden. Insbesondere kann hierbei die Sicherheitsabschaltung ein Stoppen einer Antriebseinheit zum Antreiben eines Werkzeugs der Werkzeugmaschine sein.

Vorteilhafterweise weist die Erkennungseinheit ein Mittel auf, das dazu vorgesehen ist, ein Bewegungsmerkmal eines überwachten Objekts einzustufen. Hierdurch kann eine besonders kurze Reaktionszeit erreicht werden, indem lediglich ein Geschwindigkeitsgrad, wie "schnell", "mittelschnell", "langsam" usw., ermittelt wird und wobei einem Geschwindigkeitsgrad eine Sicherheitsmaßnahme zugeordnet ist. Unter einem "Einstufen" einer erfassten Kenngröße soll insbesondere das Zuordnen der Kenngröße zu einem vordefinierten Intervall verstanden werden.

Eine besonders effektive Erkennung kann erreicht werden, wenn die Werkzeugmaschinenüberwachungsvorrichtung, insbesondere die Erkennungseinheit, ein Antennenarray aufweist. Unter einem "Antennenarray" soll in diesem Zusammenhang insbesondere eine Gruppe von mehreren voneinander unterschiedlichen Antennen verstanden werden, die im Betrieb mittels einer gemeinsamen Signalerzeugungseinheit mit einem zu sendenden Signal gespeist werden. Zweckmäßigerweise weist das Antennenarray zumindest eine Ultrabreitband-Radar-Antenne auf.

Es kann die Genauigkeit bei einer Erkennung erhöht werden, wenn das Antennenarray als phasenvariables Antennenarray ausgebildet ist. Unter einem "phasenvariablen" Antennenarray soll in diesem Zusammenhang insbesondere ein Antennenarray verstanden werden, welchem zumindest ein Phasenverschiebungsmittel zugeordnet ist, welches zur Änderung zumindest einer relativen Phasenlage zwischen zwei Signalen, die von unterschiedlichen Antennen des Antennenarrays abgestrahlt werden, vorgesehen ist.

Eine hohe Flexibilität in der Gestaltung von Überwachungsfunktionen kann erreicht werden, wenn die Erkennungseinheit zumindest zwei Überwachungsbereiche zum Überwachen eines Anwendungsprozesses der Werkzeugmaschine festlegt. Die Überwachungsbereiche sind vorzugsweise voneinander unterschiedlich ausgebildet. Hierbei können die Überwachungsbereiche voneinander getrennt ausgebildet sein oder sie können aneinander angrenzen oder sie können einen gemeinsamen Überlappungsbereich bilden. Insbesondere kann ein erster Überlappungsbereich einen zweiten Überwachungsbereich umfassen.

In einer vorteilhaften Weiterbildung der Erfindung wird vorgeschlagen, dass die Erkennungseinheit relativ zu einem Werkzeug einen werkzeugnahen Überwachungsbereich und einen werkzeugfernen Überwachungsbereich festlegt und in zumindest einem Überwachungsmodus eine Geschwindigkeitsbestimmung eines sich im werkzeugfernen Überwachungsbereich bewegenden Objekts erfolgt. Dies ist von Vorteil insbesondere im Hinblick auf die intrinsische Begrenzung der Auswertegeschwindigkeit der Erkennungseinheit, auf die Reaktionszeit einer Aktorikeinheit sowie auf die Trägheit eines zu stoppenden aktiven Objekts, die ein frühzeitiges Erkennen einer kritischen Bewegung eines überwachten Objekts, wie z.B. eine Abrutschbewegung von menschlichem Gewebe oder ein Annähern von menschlichem Gewebe zu einem aktiven Objekt der Werkzeugmaschine, erfordern. Unter einem "werkzeugnahen" Überwachungsbereich "relativ zu einem Werkzeug" soll insbesondere ein Überwachungsbereich verstanden werden, welcher sich vorzugsweise aus Punkten zusammensetzt, die einen kleinsten Abstand zum Werkzeug aufweisen, der maximal einen ersten Maximalwert beträgt, wobei unter einem "werkzeugfernen" Überwachungsbereich ein Überwachungsbereich verstanden werden soll, der sich zumindest aus Punkten zusammensetzt, die einen kleinsten Abstand zum Werkzeug aufweisen, der größer als der erste Maximalwert ist und vorzugsweise maximal einen zweiten, gegenüber dem ersten Maximalwert größeren Maximalwert aufweist. Der werkzeugnahe Überwachungsbereich und der werkzeugferne Überwachungsbereich können sich überlappen oder können voneinander getrennt ausgebildet sein, wobei sie durch einen weiteren Überwachungsbereich voneinander getrennt sein können.

Außerdem wird vorgeschlagen, dass den Überwachungsbereichen jeweils ein unterschiedlicher Betriebsmodus der Werkzeugmaschine zugeordnet ist, wodurch eine hohe Flexibilität in der Anwendung der Werkzeugmaschine erzielt werden kann.

In einer bevorzugten Ausgestaltung der Erfindung wird vorgeschlagen, dass zumindest einem der Überwachungsbereiche ein Warnmodus der Werkzeugmaschine zugeordnet ist. Dadurch können vorteilhaft bei Erkennung einer potentiell gefährlichen Anwendungssituation Vorschutzmaßnahmen eingeleitet werden, bevor ein Bediener sich in einer akuten Gefahr befindet.

In diesem Zusammenhang können ein vorteilhafter Warneffekt und eine hohe Sicherheit erreicht werden, wenn die Erkennungseinheit - im Zusammenwirken mit einer Werkzeugmaschinenantriebseinheit zum Antreiben eines Werkzeugs - zum Verlangsamen eines Werkzeugantriebs im Warnmodus vorgesehen ist.

Des Weiteren wird vorgeschlagen, dass zumindest einem der Überwachungsbereiche ein Beseitigen eines angetriebenen Werkzeugs aus dem Überwachungsbereich zugeordnet ist, wodurch eine potentielle Verletzungsgefahr effektiv beseitigt werden kann. Das "Beseitigen" des angetriebenen Werkzeugs, das vorzugsweise mittels einer mit der Erkennungseinheit in Wirkverbindung stehenden Aktorikeinheit durchgeführt wird, kann insbesondere durch ein Verstellen des angetriebenen Werkzeugs in eine Sicherheitsposition außerhalb des Überwachungsbereichs, wie z.B. mittels eines Versenkens des angetriebenen Werkzeugs unterhalb einer Werkzeugmaschinenarbeitsfläche, durch ein Abschalten des Antriebs des Werkzeugs und/oder durch ein Bedecken einer Schneidkante des Werkzeugs verwirklicht werden.

In einer bevorzugten Ausbildung der Erfindung wird vorgeschlagen, dass zumindest einem der Überwachungsbereiche eine Sicherheitsabschaltung der Werkzeugmaschine zugeordnet ist, wodurch eine hohe Bediensicherheit der Werkzeugmaschine erreicht werden kann.

Ferner wird vorgeschlagen, dass die Erkennungseinheit es ermöglicht, eine Unterscheidung von menschlichem oder tierischem Gewebe einerseits und Holz oder Metall oder Kunststoffen andererseits zu treffen, wobei abhängig von der erkannten Materialart verschiedene Vorgänge eingeleitet werden können. Wird menschliches Gewebe erkannt, können oben beschriebene Sicherheitsmaßnahmen eingeleitet werden. Wird ein zu bearbeitendes Werkstück erkannt, können Erfassungsvorgänge zum Charakterisieren eines Werkstückzustands, wie z.B. einer Feuchtigkeit, einer Dicke, einer Vorschubgeschwindigkeit usw., eingeleitet werden.

Vorteilhafterweise umfasst die Erkennungseinheit eine Recheneinheit, die dazu vorgesehen ist, die Anwendungssituation durch eine auf einer unscharfen und/oder neuronalen Logik basierende Auswertung von Kenngrößen zu erkennen. Mit Hilfe einer unscharfen Logik kann von der Recheneinheit anhand des erfassten Signals eine große und komplexe Informationsmenge schnell ausgewertet werden. Eine unscharfe Logik stellt insbesondere eine Logik dar, die dem Auftreten eines bestimmten Ereignisses einen Wahrscheinlichkeitswert im Intervall zwischen 0 (falsch) und 1 (wahr) zuordnet. Durch eine neuronale Logik können vorteilhafte Selbstlernfunktionen der Werkzeugmaschinenüberwachungsvorrichtung erreicht werden.

In einer vorteilhaften Weiterbildung der Erfindung wird vorgeschlagen, dass die Erkennungseinheit eine Datenbank aufweist, in welcher einem Satz von Kenngrößen eine Anwendungssituation zugeordnet ist. Es kann ein besonders schneller Erkennungsprozess einer Anwendungssituation vorteilhaft erreicht werden, indem eine Korrelation zwischen den erfassten Kenngrößen und einer Anwendungssituation untersucht wird.

Ferner wird ein Verfahren zur Erkennung einer Anwendungssituation bei einem Anwendungsprozess einer Werkzeugmaschine vorgeschlagen, bei welchem zur Erkennung der Anwendungssituation wenigstens eine Kenngröße aus der Detektion von menschlichem oder tierischem Gewebe erfasst wird, wodurch eine hohe Sicherheit bei der Anwendung der Werkzeugmaschine erreicht werden kann.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Tischkreissäge in einer Ansicht von oben mit einer Überwa-chungsvorrichtung zur Überwachung von Überwachungsbereichen,
- Fig. 2: eine schematische Darstellung der Überwachungsvorrichtung,

- Fig. 3: ein von der Überwachungsvorrichtung abgestrahltes Ultrabreitband-Radarsignal,
- Fig. 4: eine Datenbank der Überwachungsvorrichtung mit Anwendungssi-tuationen,
- Fig. 5: die Erfassung von Bewegungsmerkmalen einer sich in einem Über-wachungsbereich bewegenden Hand,
- Fig. 6: das Erkennen des Vorhandenseins der Hand in einem weiteren Ü-berwachungsbereich und
- Fig. 7: das Erkennen des Vorhandenseins der Hand in einem werkzeugna-hen Überwachungsbereich,
- Fig. 8: den Frequenzverlauf für ein gestuftes Frequenzmessverfahren,
- Fig. 9: ein Blockschaltbild für ein Pseudo-Noise-System

### Beschreibung des Ausführungsbeispiels

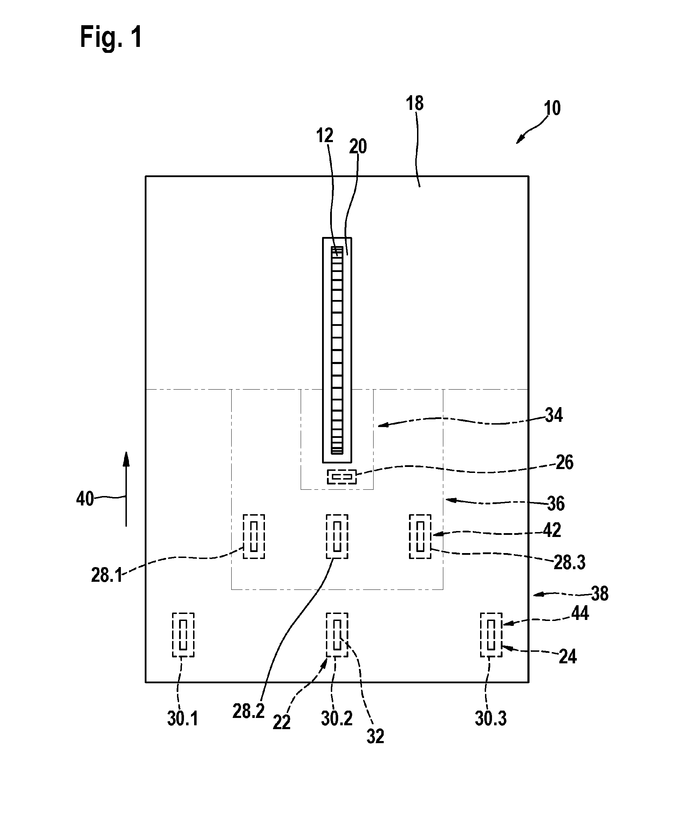

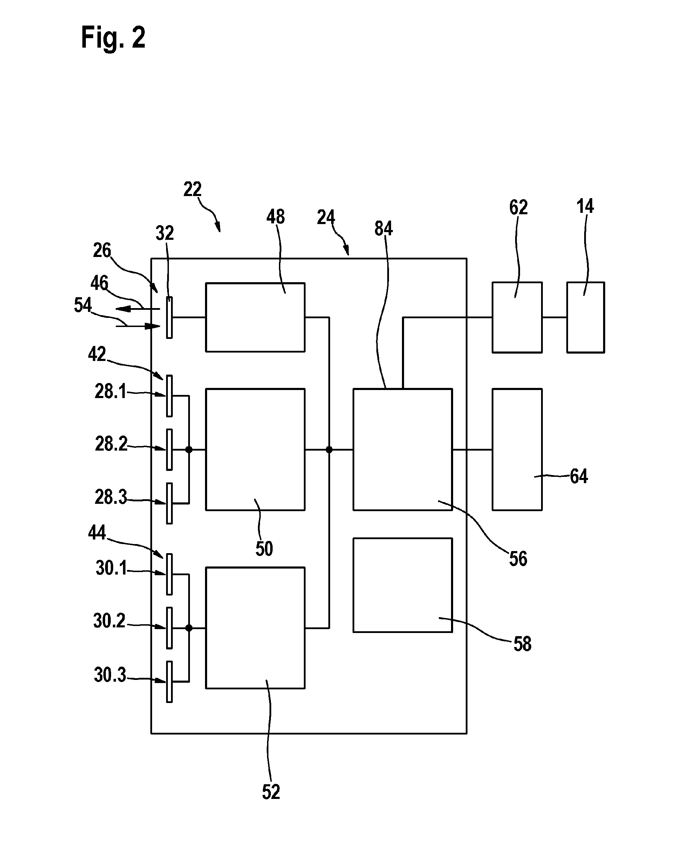

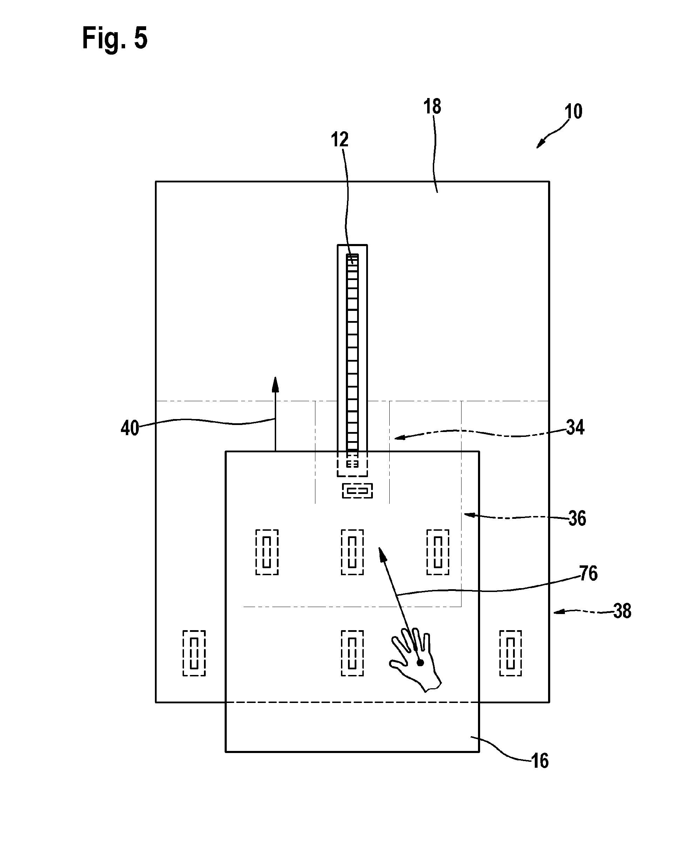

Figur 1 zeigt eine als Tischkreissäge ausgebildete Werkzeugmaschine 10 in einer Ansicht von oben. Diese weist ein als Sägeblatt ausgeführtes Werkzeug 12 auf, das in einem Betrieb mittels einer in Figur 2 dargestellten, als Elektromotor ausgebildeten Werkzeugmaschinenantriebseinheit 14 angetrieben wird, die innerhalb eines nicht sichtbaren Motorgehäuses angeordnet ist. Zum Platzieren, und zwar insbesondere zum Auflegen eines zu bearbeitenden Werkstücks 16 (siehe Figur 5), ist die Werkzeugmaschine 10 mit einer von einem Sägetisch gebildeten Werkzeugmaschinenarbeitsfläche 18 versehen. In einer in Figur 1 gezeigten Grundeinbaustellung der Werkzeugmaschine 10 ist die Werkzeugmaschinenarbeitsfläche 18 horizontal ausgerichtet. Das Werkzeug 12 ragt aus dem Motorgehäuse durch eine in der Werkzeugmaschinenarbeitsfläche 18 ausgesparte Spalte 20 in vertikaler Richtung heraus.

Die Werkzeugmaschine 10 ist ferner mit einer Werkzeugmaschinenüberwachungsvorrichtung 22 versehen. Diese weist eine Erkennungseinheit 24 auf, die zur Erkennung einer Anwendungssituation bei einer Anwendung der Werkzeugmaschine 10 vorgesehen ist. Insbesondere ist die Erkennungseinheit 24 dazu ausgelegt, das Vorhandensein eines menschlichen Körperteils in einer Gefahrenzone sowie eine im Bezug auf eine potentielle Verletzung kritische Bewegung des Körperteils zu erkennen. Hierzu ist die Erkennungseinheit 24 mit einer Mehrzahl von Ultrabreitband-Radarsensoren 26, 28.1 bis 28.3 und 30.1 bis 30.3 versehen. Sie weisen jeweils eine Ultrabreitband-Radarantenne 32 auf, die zur Abstrahlung bzw. zum Empfangen eines Ultrabreitband-Radarsignals oder einer Vielzahl diskreter Frequenzen über einen UWB-Spektralbereich vorgesehen ist.

Die Erkennungseinheit 24 mit der Auslegung der Ultrabreitband-Radarsensoren 26, 28, 30 legt drei verschiedene Überwachungsbereiche 34, 36, 38 zum Überwachen eines Anwendungsprozesses der Werkzeugmaschine 10 fest. Die Abgrenzungen der Überwachungsbereiche 34, 36, 38 in der Werkzeugmaschinenarbeitsfläche 18 sind mittels strichpunktierter Linien schematisch dargestellt. Die Überwachungsbereiche 34, 36, 38 erstrecken sich horizontal in der Werkzeugmaschinenarbeitsfläche 18 sowie in vertikaler Richtung nach oben, d.h. sie weisen eine Höhe relativ zur Werkzeugmaschinenarbeitsfläche 18 auf. Die Überwachungsbereiche 34, 36, 38 sind der Übersichtlichkeit halber mittels scharfer Linien schematisch abgegrenzt. Die Überwachungsbereiche 34, 36, 38 können paarweise Überlappungsbereiche bilden, welche sich jeweils in einer Zone der Werkzeugmaschinenarbeitsfläche 18 beiderseits einer der gedachten Grenzlinien erstrecken.

Ein erster, werkzeugnaher Überwachungsbereich 34 entspricht einem Werkzeugbereich, der sich in unmittelbarer Nähe des Werkzeugs 12 erstreckt und hierbei an die Außenkontur des Werkzeugs 12 angrenzt. Insbesondere setzt sich der erste Überwachungsbereich 34 aus Punkten zusammen, die einen kleinsten Abstand zum Werkzeug 12 von maximal D₁ cm aufweisen, wobei der Abstand D₁ vorzugsweise maximal 2 cm beträgt. Die Erkennungseinheit 24 legt außerdem einen zweiten, werkzeugfernen Überwachungsbereich 36 fest, welcher sich an den ersten, werkzeugnahen Überwachungsbereich 34 anschließt und diesen umgreift. Er setzt sich zumindest aus Punkten zusammen, die einen kleinsten Abstand zum Werkzeug 12 aufweisen, der größer als D₁ cm ist und maximal D₂ cm beträgt, wobei der Abstand D₂ > D₁ z.B. 15 cm beträgt. Ferner legt die Erkennungseinheit 24 einen dritten, werkzeugfernen Überwachungsbereich 38 fest, der sich an den zweiten Überwachungsbereich 36 anschließt, diesen umgreift und sich zumindest aus Punkten zusammensetzt, die einen kleinsten Abstand zum Werkzeug 12 von zumindest D₂ cm aufweisen. Die Überwachungsbereiche 34, 36, 38 sind in einer Werkstückschieberichtung 40, in welche ein zu bearbeitendes Werkstück 16 auf der Werkzeugarbeitsfläche 18 geschoben wird, im Wesentlichen vor dem Werkzeug 12 angeordnet. Hierbei greift ein sich in Werkstückschieberichtung 40 auf das Werkzeug 12 bewegendes Objekt sukzessiv in den dritten, in den zweiten und abschließend in den ersten Überwachungsbereich ein. Die in Figur 1 gezeigte Ausgestaltung der Überwachungsbereiche 34, 36, 38 ist beispielhaft. Es können durch die Auslegung der Ultrabreitband-Radarsensoren 26, 28, 30 weitere Formen der Überwachungsbereiche 34, 36, 38 erzielt werden.

Der erste, werkzeugnahe Überwachungsbereich 34 ist mittels des Ultrabreitband-Radarsensors 26 festgelegt. Dem Überwachungsbereich 36 sind drei Ultrabreitband-Radarsensoren 28.1 bis 28.3 zugeordnet, wobei die entsprechenden Ultrabreitband-Radarantennen 32 in einem ersten Antennenarray 42 ausgelegt sind. Dem Überwachungsbereich 38 sind drei Ultrabreitband-Radarsensoren 30.1 bis 30.3 zugeordnet, wobei die entsprechenden Ultrabreitband-Radarantennen 32 in einem zweiten Antennenarray 44 festgelegt sind. Im betrachteten Fall sind die Antennenarrays 42, 44 als phasenvariable Antennenarrays ausgebildet. Hierbei können innerhalb eines Antennenarrays 42, 44 relative Phasenlagen zwischen Sendesignalen, die von den einzelnen, das entsprechende Antennenarray 42, 44 bildenden Ultrabreitband-Radarantennen 32 erzeugt werden, gesteuert werden. Es kann hierbei mittels konstruktiver und/oder destruktiver Interferenzen ein Sendesignal zur Strahlung in einer bevorzugten Senderichtung gebündelt werden. Die Steuerung der relativen Phasenlagen erfolgt mittels nicht näher dargestellter Phasenverschiebeelemente.

Figur 2 zeigt die Erkennungseinheit 24 der Werkzeugmaschinenüberwachungsvorrichtung 22 in einer schematischen Ansicht. Die Erkennungseinheit 24 weist die Ultrabreitband-Radarsensoren 26, 28, 30 auf, die jeweils eine Ultrabreitband-Radarantenne 32 umfassen. Ein von der Ultrabreitband-Radarantenne 32 des Ultrabreitband-Radarsensors 26 abgestrahltes Radarsignal wird mittels einer Signalerzeugungseinheit 48 erzeugt und in die Ultrabreitband-Radarantenne 32 gespeist. Den Ultrabreitband-Radarantennen 32 des Antennenarrays 42 ist eine gemeinsame Signalerzeugungseinheit 50 zugeordnet, während dem Antennenarray 44 eine Signalerzeugungseinheit 52 zugeordnet ist.

Nach einer Reflexion an einem überwachten Objekt wird das Radarsignal bzw. die in dessen Bandbreite liegenden, diskret ausgesandten Frequenzen fᵢ als Empfangssignal 54 von einer oder mehreren der Ultrabreitband-Antennen 32 empfangen. Nach dem Empfangen wird dieses in einer nicht gezeigten Signalaufbereitungseinheit gefiltert, verstärkt, in eine digitale Form umgewandelt und anschließend auf eine Recheneinheit 56 der Erkennungseinheit 24 zur Auswertung gegeben.

Dabei kann das abgestrahlte Frequenzsignal aus einer Reihe von diskreten Frequenzen fᵢ bestehen, die sich über die entsprechende Bandbreite des UWB Signals erstrecken.

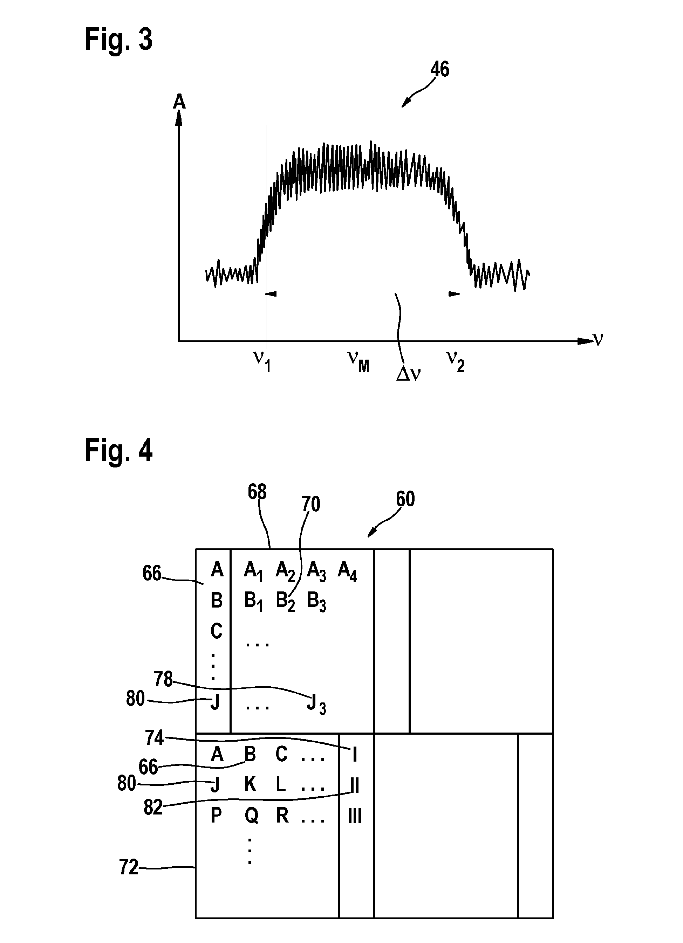

Ein Ultrabreitband-Radarsignal 46 ist in einer spektralen Darstellung in Figur 3 gezeigt, wobei die Amplitude A auf der Y-Achse und eine Frequenz ν auf der X-Achse aufgetragen ist. Das Ultrabreitband-Radarsignal 46 wird mit einer Mittenfrequenz ν_{M} von 5 GHz und einer Signalbandbreite Δν von 2 GHz um diese Mittenfrequenz ν_{M} übertragen. Dabei beträgt eine Unterfrequenz ν₁= 4 GHz und eine Oberfrequenz ν₂ = 6 GHz.

In vorteilhafter Weise besteht das Sendesignal nicht aus einem einzelnen UWB-Impuls, sondern es wird ein Modulationsverfahren in Form eines gestuften Frequenz-Messverfahren genutzt werden. Hierbei kann die Übertragungsfunktion des Systems einschließlich des zu prüfenden Objektes gemessen werden, indem beliebige diskrete Frequenzen innerhalb eines UWB-Spektrums, wie es beispielsweise in Figur 3 dargestellt ist, ausgesendet werden und die entsprechenden zugehörigen Reflexionen gemessen werden.

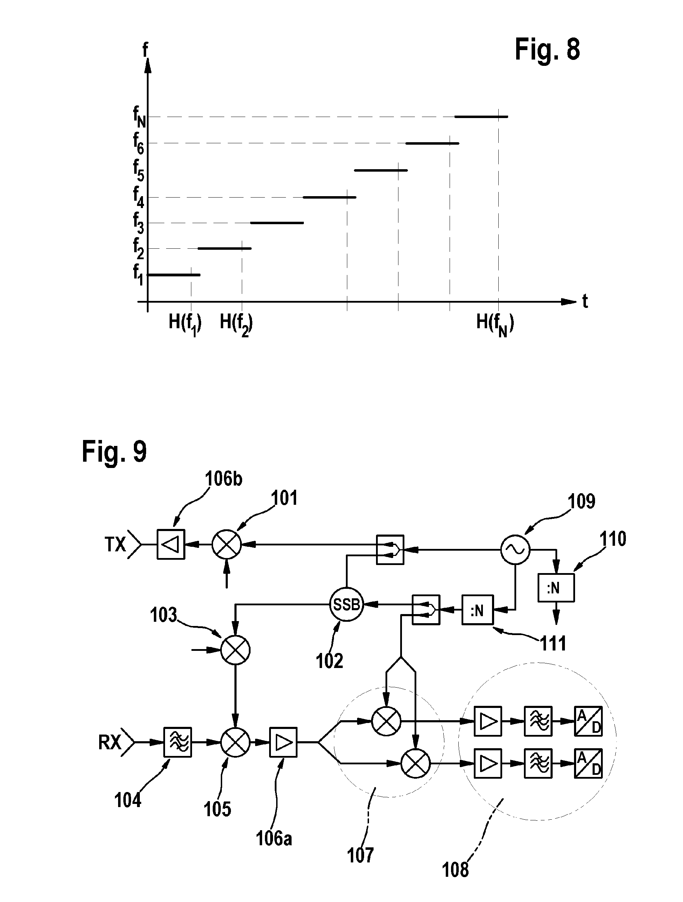

Figur 8 zeigt eine schematische Darstellung des Frequenzverlaufs für ein solches gestuftes Frequenzmessverfahren. Dabei werden zu verschiedenen Abtastzeitpunkten tᵢ verschieden diskrete und relativ schmalbandige Frequenzen fᵢ, die allesamt innerhalb der UWB-Bandbreite liegen, abgestrahlt und die jeweiligen Reflektionen des zu vermessenden Systems bei diesen Frequenzen gemessen. Aus dem Vergleich von Sende- und Empfangssignal kann in bekannter Weise die jeweilige Übertragungsfunktion H(fᵢ) bestimmt werden, die wiederum einen Rückschluss auf das zu prüfende Objekt ermöglicht.

Alternativ hierzu kann das erfindungsgemäße System auch ein Modulationsverfahren mit Pseudo-Noise-Codierung des Sendesignals nutzten, um durch Korrelation des Empfangssignals mit dem zeitlich verschobenen Sendesignal eine Impulsantwort des zu prüfenden Objektes zu messen.

Figur 9 zeigt ein Blockschaltbild eines solchen Pseudo-Noise-Systems.

Der VCO 109 sendet ein Continous-Wave-Träger-Signal, welchem durch den Sendeschalter 101 ein Pseudo-Noise Code (PN-Code) aufmoduliert wird. Das Signal wird durch den Sendeverstärker 106b verstärkt und über die Sendeantenne (TX) abgestrahlt.

Durch einen Teiler 111 und einen Single-Side-Band-Mischer 102 wird ein zur Sendefrequenz versetzter Träger generiert, welcher durch den Empfangsschalter 103 wieder eine PN-Codierung erhält.

Der Empfangsmischer 105 setzt das empfangene Signal auf eine Zwischenfrequenz, welche durch den Empfangsverstärker 106a verstärkt wird. Die Basisbandmischer 107 setzen das Empfangssignal von der Zwischenfequenz ins Basisband um. Die Basisbandschaltung 108 verstärkt, filtert und macht eine Analog-Digital-Wandlung. Nach der Basisbandverarbeitung erhält man die Impulsantwort des Prüfobjekts.

Die Erkennungseinheit 24 des erfindungsgemäßen Systems gemäß der Darstellung in Figur 2 weist eine Speichereinheit 58 auf, in der eine Datenbank 60 (siehe Figur 4) mit Überwachungsinformationen gespeichert wird. Die Recheneinheit 56 weist vorzugsweise zumindest einen Mikroprozessor auf oder sie kann als Mikroprozessor ausgebildet sein. Ferner ist in der Speichereinheit 58 eine Signalverarbeitungssoftware gespeichert, die zur Auswertung des Empfangssignals 54 dient und von der Recheneinheit 56 ausgeführt wird.

Die Erkennungseinheit 24 steht ferner mit einer Aktorikeinheit 62 in Wirkverbindung, welche anhand eines Erkennungssignals der Erkennungseinheit 24 Sicherheitsmaßnahmen von einer weiteren Einheit der Werkzeugmaschine 10 auslösen kann. Insbesondere steht die Aktorikeinheit 62 in Wirkverbindung mit der Werkzeugmaschinenantriebseinheit 14, so dass anhand eines Erkennungssignals ein durchgeführter Werkzeugantrieb an eine Anwendungssituation angepasst bzw. gestoppt werden kann. Die Aktorikeinheit 62 kann ferner zum Antreiben von weiteren, nicht gezeigten Sicherungsmitteln vorgesehen sein. Insbesondere kann die Aktorikeinheit 62 Sicherheitsmittel antreiben, die dazu dienen, das Werkzeug 12 unterhalb der Werkzeugmaschinenarbeitsfläche 18 zu versenken. Es können weitere Sicherheitsmittel vorgesehen sein, die zum Bedecken der Schneidkante des Werkzeugs 12 dienen, wie z.B. eine Schutzhaube. Die Erkennungseinheit 24 steht außerdem in Wirkverbindung mit einer Ausgabeeinheit 64, die dazu vorgesehen ist, den Bediener auf optische, akustische und/oder haptische Weise zu warnen.

Figur 4 zeigt die Datenbank 60. Es wird angenommen, dass ein Bediener ein Sägen des Werkstücks 16, welches in Figur 5 dargestellt ist, durchführen will. Hierzu wird das Werkstück 16 auf die Werkzeugmaschinenarbeitsfläche 18 aufgestellt. Diese Anwendungssituation wird in Figur 4 als Anwendungssituation 66 bezeichnet. Das Aufstellen des Werkstücks 16 induziert eine Änderung des die Erkennungseinheit 24 umgebenden Dielektrikums, welche sich in einer Änderung des Empfangssignals 54 widerspiegelt. Beispielsweise ist nach dem Aufstellen eine Resonanzfrequenz im Frequenzspektrum des Empfangssignals 54 verschoben. Die Recheneinheit 56 kann diesem erfassten Empfangssignal 54 die Anwendungssituation 66 zuordnen. Dies erfolgt mittels der Datenbank 60. In dieser sind in einer Zuordnungstabelle 68 Kenngrößen, z.B. A₃, B₂ usw., jeweils einer Anwendungssituation A bzw. B usw. zugeordnet. Diese Kenngrößen entsprechen einem Signalmuster, d.h. einer Kenngröße oder einem Satz von charakteristischen Kenngrößen, wie z.B. einer Signalamplitude, der Position eines Amplitudenmaximums usw., die jeweils ein für eine Anwendungssituation typisches Spektrum des Empfangssignals 54 charakterisieren, oder sie können Kenngrößen sein, die, wie weiter unten beschrieben, die Bewegung eines überwachten Objekts relativ zum Werkzeug 12 charakterisieren. Ausgehend vom erfassten Empfangssignal 54 untersucht die Recheneinheit 56 z.B. eine Korrelation zwischen dem Empfangssignal 54 und den Signalmustern, bis ein Signalmuster 70, welches die größte Korrelation mit dem erfassten Empfangssignal 54 aufweist, bestimmt wird. Die Bestimmung des Signalmusters 70 und daher der zutreffenden Anwendungssituation 66 wird von der Recheneinheit 56 mittels einer Methode der Fuzzy-Logik (unscharfe Logik) zur Auswertung des Spektrums des Empfangssignals 54 durchgeführt.

In der Datenbank 60 sind in einer weiteren Zuordnungstabelle 72 Anwendungssituationen A, B, C usw. Vorgehensweisen I, II, III usw. für die Werkstückbearbeitung zugeordnet. Wenn eine Anwendungssituation von der Recheneinheit 56 erkannt wird, kann auf diese Anwendungssituation reagiert werden, indem die Aktorikeinheit 62 dem Vorgehen entsprechend einen Verlauf der Werkstückbearbeitung ggf. modifiziert. Beispielsweise wird der Anwendungssituation 66 ein Vorgehen 74 zugeordnet, nach welchem ein Werkzeugantrieb unverändert weiterverfolgt wird.

Zur Erweiterung der Datenbank 60 mit neuen Anwendungssituationen und neuen Vorgehensweisen für diese Anwendungssituationen ist ein Lernmodus der Werkzeugmaschine vorgesehen. In diesem Modus können Anwendungssituationen von dem Bediener absichtlich geschaffen werden, wobei die Recheneinheit 56 selbständig lernen kann, solche Anwendungssituationen zu erkennen und zu ermitteln, welche Vorgehensweisen diesen Anwendungssituationen angepasst sind. Dabei lernt die Recheneinheit 56, diese Anwendungssituationen jeweils mit einem oder mehreren Signalmustern zu korrelieren. Hierzu arbeitet die Recheneinheit 56 in diesem Modus auf der Basis einer neuronalen Logik, die eine solche Selbstlernfunktion erlaubt. Dabei kann der Bediener ein Sicherheitsniveau jederzeit einstellen, bis ein gewünschtes Vorgehen für eine bestimmte Anwendungssituation erreicht ist. Dieses kann automatisch in der Datenbank 60 gespeichert werden.

Die Funktionsweise der Werkzeugmaschinenüberwachungsvorrichtung 22 wird anhand der Figuren 5 bis 7 näher beschrieben. Das Eindringen des Werkstücks 16 in den Überwachungsbereich 38 wird von der Erkennungseinheit 24 erkannt. Hierbei wird mittels der Erkennungseinheit 24, wie oben beschrieben, anhand von Signalmustern der Datenbank 60 eine Unterscheidung von menschlichem oder tierischem Gewebe einerseits und Holz oder Metall oder Kunststoffen andererseits getroffen. Wird das Werkstück 16 aus Holz erkannt, so werden Erfassungsvorgänge mittels der Ultrabreit-Radarsensoren 26, 28, 30 eingeleitet, die zur Ermittlung von z.B. einer Abmessung des Werkstücks 16, insbesondere der Werkstückdicke, von der Vorschubbewegung in der Werkstückschieberichtung 40 oder von der Holzfeuchte dienen. Nach dem Starten eines Werkzeugantriebs wird von zumindest einem Ultrabreitband-Radarsensor 26, 28 bzw. 30 das Werkzeug 12 auf dessen Umdrehungszahl sowie auf eine potentielle Unwucht überwacht.

Wird nun die Hand des Bedieners im Überwachungsbereich 38 erfasst, so werden Erfassungsvorgänge eingeleitet, die zur Vermeidung eines Kontakts der Hand mit dem rotierenden Werkzeug 12 dienen. Wird im werkzeugfernen Überwachungsbereich 38 eine schnelle Geschwindigkeitszunahme oder eine hohe Momentangeschwindigkeit von menschlichem Gewebe zum rotierenden Werkzeug 12 detektiert, so dass selbst bei einer möglichen anschließenden Geschwindigkeitsabnahme der Kontakt mit dem Werkzeug 12 unvermeidbar ist, dann kann bereits in dieser Zone z.B. eine Abschaltung der Werkzeugmaschinenantriebseinheit 14 erfolgen. Die Erkennungseinheit 24 erfasst die Position der Hand im Überwachungsbereich 38. Ferner führt die Erkennungseinheit 24 eine Geschwindigkeitsbestimmung aus, indem Bewegungsmerkmale, welche die Bewegung der Hand relativ zum rotierenden Werkzeug 12 charakterisieren, erfasst werden. Durch die Erfassung der Position der Hand relativ zum Werkzeug 12 zu verschiedenen Zeitpunkten werden hierbei eine Bewegungsrichtung 76, der momentane Wert der Geschwindigkeit sowie der Beschleunigung der Hand mittels der Recheneinheit 56 erfasst. Das Vorliegen von zumindest einem der folgenden Merkmale, und zwar der auf das Werkzeug 12 weisenden Bewegungsrichtung 76, eines momentanen Werts der Geschwindigkeit und/oder der Beschleunigung oberhalb eines vorbestimmten Schwellenwerts 78 (siehe Figur 4), oder das Vorliegen einer beliebigen Kombination dieser Merkmale wird mittels der Datenbank 60 einer Anwendungssituation 80 zugeordnet. Diese ist wiederum einem als Sicherheitsmaßnahme 82 ausgeführten Vorgehen zugeordnet, in welchem die Aktorikeinheit 62 eine Sicherheitsabschaltung der Werkzeugmaschine 10, und zwar der Werkzeugmaschinenantriebseinheit 14, betätigt. Die Recheneinheit 56 dient hierbei als Mittel 84, das insbesondere über die Datenbank 60 einem erfassten Bewegungsmerkmal der überwachten Hand eine Sicherheitsmaßnahme, und zwar die Sicherheitsabschaltung der Werkzeugmaschinenantriebseinheit 14, zuordnet. Wie oben beschrieben, wird hierbei der momentane Wert der Geschwindigkeit und/oder der Beschleunigung unter zwei Stufen "langsam" und "schnell" mit Hilfe des als Recheneinheit 56 ausgebildeten Mittels 84 eingestuft, indem das Überschreiten des Schwellenwerts 78 untersucht wird. Weitere, mittlere Stufen sind denkbar.

Die Geschwindigkeitsbestimmung, d.h. die Erfassung von zumindest einem Bewegungsmerkmal, erfolgt im Überwachungsbereich 38, welcher dem werkzeugfernen Überwachungsbereich mit dem größten Mindestabstand zum Werkzeug 12 entspricht. Hierbei kann aufgrund der restlichen Entfernung der Hand zum Werkzeug 12 die Sicherheitsabschaltung rechtzeitig getroffen werden, so dass ein Kontakt der Hand mit dem Werkzeug 12 in dessen angetriebenem Zustand vermieden werden kann. Durch diese Detektionsart in bereits einer äußeren Zone steht eine größere Zeitspanne zum Deaktivieren des Werkzeugantriebs zur Verfügung.

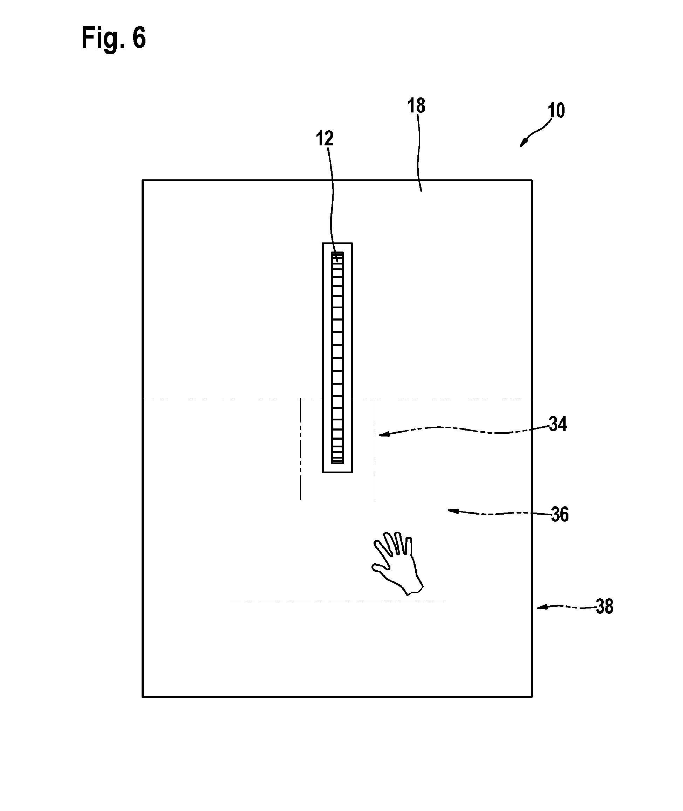

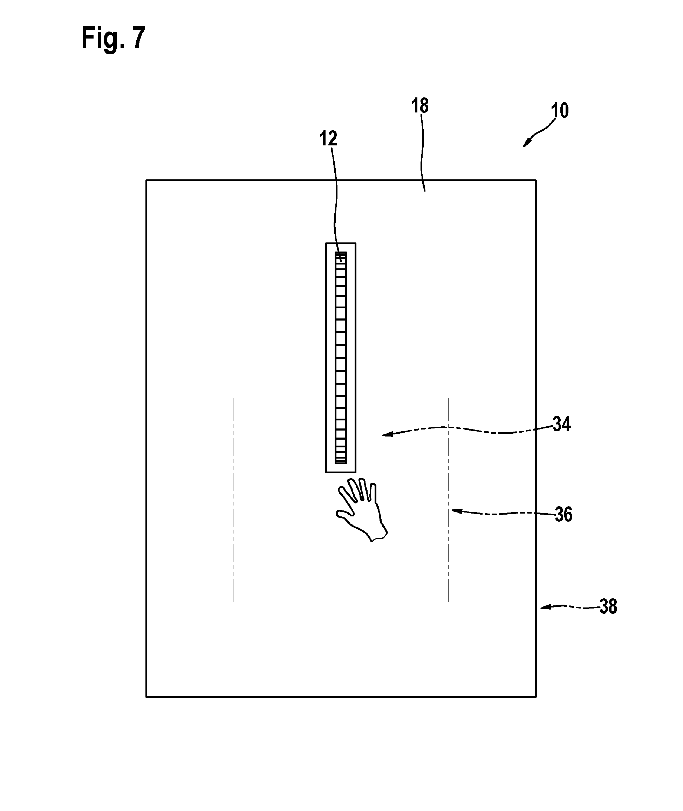

Den weiteren Überwachungsbereichen 34, 36 sind unterschiedliche Betriebsmodi der Werkzeugmaschine 10 zugeordnet. Insbesondere ist dem Überwachungsbereich 36 ein Warnmodus zugeordnet. Wird, wie in Figur 6 dargestellt, die Hand des Bedieners im Überwachungsbereich 36 erkannt, so wird in einem ersten Warnmodus von der Erkennungseinheit 24 eine Warnungsausgabe mittels der Ausgabeeinheit 64 ausgelöst. In diesem Warnmodus oder in einem weiteren Warnmodus erfolgt eine Warnung des Bedieners im Zusammenwirken mit der Werkzeugmaschinenantriebseinheit 14 mittels eines Verlangsamens des Werkzeugantriebs, d.h. durch das Vermindern der Drehzahl bei der Rotation des Werkzeugs 12. Dem werkzeugnahen Überwachungsbereich 34 ist ein Aktorikmodus der Werkzeugmaschine 10 zugeordnet. Wird, wie in Figur 7 dargestellt, das Vorhandensein der Hand im werkzeugnahen Überwachungsbereich 34 erkannt, so wird mittels der Aktorikeinheit 62 unmittelbar eine Sicherheitsabschaltung der Werkzeugmaschinenantriebseinheit 14 ausgelöst.

Die Werkzeugmaschinenüberwachungsvorrichtung 22 kann mit Vorteil bei weiteren stationären Werkzeugmaschinen eingesetzt werden, wie z.B. bei Bandsägen, Kappsägen, Paneelsägen, Zugsägen Hobeln usw.

## Patentansprüche

1. Werkzeugmaschinenüberwachungsvorrichtung mit einer Erkennungseinheit (24) zur Erkennung einer Anwendungssituation (66, 80) bei einer Werkzeugmaschine (10), wobei die Erkennungseinheit (24) eine Positions- und/oder Geschwindigkeitsbestimmung von menschlichem oder tierischem Gewebe ermöglicht, **dadurch gekennzeichnet, dass** die Erkennungseinheit (24) es ermöglicht, eine Unterscheidung von menschlichem oder tierischem Gewebe einerseits und Holz oder Metall oder Kunststoffen andererseits zu treffen, wobei zumindest ein Ultrabreitband-Radarsensor (26, 28, 30) der Erkennungseinheit es ermöglicht, zur Detektion des menschlichen oder tierischen Gewebes eine Mehrzahl von diskreten, in der Frequenz gegeneinander verschobenen Frequenzen fᵢ abzustrahlen.

2. Werkzeugmaschinenüberwachungsvorrichtung nach Anspruch 1, **dadurch gekennzeichnet, dass** die Erkennungseinheit (24) ein Mittel (84) aufweist, das dazu vorgesehen ist, einem Bewegungsmerkmal eines überwachten Objekts zumindest eine Sicherheitsmaßnahme (82) zuzuordnen.

3. Werkzeugmaschinenüberwachungsvorrichtung nach Anspruch 2, **dadurch gekennzeichnet, dass** zumindest einem Bewegungsmerkmal eine Sicherheitsabschaltung der Werkzeugmaschine (10) zugeordnet ist.

4. Werkzeugmaschinenüberwachungsvorrichtung nach einem der vorhergehenden Ansprüche, **gekennzeichnet durch** ein Antennenarray (42, 44).

5. Werkzeugmaschinenüberwachungsvorrichtung nach einem der vorhergehenden Ansprüche, **dadurch gekennzeichnet, dass** die Erkennungseinheit (24) zumindest zwei Überwachungsbereiche (34, 36, 38) zum Überwachen eines Anwendungsprozesses der Werkzeugmaschine (10) festlegt.

6. Werkzeugmaschinenüberwachungsvorrichtung nach Anspruch 5, **dadurch gekennzeichnet, dass** die Erkennungseinheit (24) relativ zu einem Werkzeug (12) einen werkzeugnahen Überwachungsbereich (34) und einen werkzeugfernen Überwachungsbereich (38) festlegt und in zumindest einem Überwachungsmodus eine Geschwindigkeitsbestimmung eines sich im werkzeugfernen Überwachungsbereich (38) bewegenden Objekts erfolgt.

7. Werkzeugmaschinenüberwachungsvorrichtung nach Anspruch 5 oder 6, **dadurch gekennzeichnet, dass** den Überwachungsbereichen (36, 38) jeweils ein unterschiedlicher Betriebsmodus der Werkzeugmaschine (10) zugeordnet ist.

8. Werkzeugmaschinenüberwachungsvorrichtung nach einem der vorhergehenden Ansprüche, **dadurch gekennzeichnet, dass** die Erkennungseinheit (24) eine Recheneinheit (56) umfasst, die dazu vorgesehen ist, die Anwendungssituation (66, 80) durch eine auf einer unscharfen und/oder neuronalen Logik basierende Auswertung von Kenngrößen zu erkennen.

9. Werkzeugmaschinenüberwachungsvorrichtung nach einem der vorhergehenden Ansprüche, **dadurch gekennzeichnet, dass** die Erkennungseinheit (24) eine Datenbank (60) aufweist, in welcher einem Satz von Kenngrößen eine Anwendungssituation (66, 80) zugeordnet ist.

10. Werkzeugmaschine mit einer Werkzeugmaschinenüberwachungsvorrichtung nach einem der vorhergehenden Ansprüche.

11. Verfahren zur Erkennung einer Anwendungssituation (66,80) bei einem Anwendungsprozess einer Werkzeugmaschine (10), **dadurch gekennzeichnet, dass** zur Erkennung der Anwendungssituation (66, 80) wenigstens eine Kenngröße aus der Detektion von menschlichem oder tierischem Gewebe erfasst wird, wobei zur Detektion des menschlichen oder tierischen Gewebes ein gestuftes Frequenz Messverfahren genutzt wird.

12. Verfahren nach Anspruch 11, **dadurch gekennzeichnet, dass** das gestufte Frequenz Messverfahren eine Mehrzahl diskreter Frequenzen nutzt.

13. Verfahren nach Anspruch 11 oder 12, **dadurch gekennzeichnet, dass** zur Detektion des menschlichen oder tierischen Gewebes zumindest ein Ultrabreitband-Radar-Sensor genutzt wird.

14. Verfahren nach Anspruch 11 oder 12, **dadurch gekennzeichnet, dass** zur Detektion des menschlichen oder tierischen Gewebes eine Pseudo-Noise Codierung des Sendesignals genutzt wird.
